## Europäisches Patentamt

## European Patent Office

## Office européen des brevets

(11) Veröffentlichungsnummer: **0 207 443**
**B1**

(12) # EUROPÄISCHE PATENTSCHRIFT

(45) Veröffentlichungstag der Patentschrift:
31.08.88

(21) Anmeldenummer: **86108692.4**

(22) Anmeldetag: **25.06.86**

(51) Int. Cl.⁴: **F 02 B 37/02,** F 01 N 7/08,
F 16 L 41/02

(54) Abgassammelrohr für eine Brennkraftmaschine.

(30) Priorität: **28.06.85 DE 3523193**

(43) Veröffentlichungstag der Anmeldung:
**07.01.87 Patentblatt 87/2**

(45) Bekanntmachung des Hinweises auf die Patenterteilung:
**31.08.88 Patentblatt 88/35**

(84) Benannte Vertragsstaaten:
**DE FR GB NL**

(56) Entgegenhaltungen:
**CH-A-139 282**
**FR-A-875 899**
**FR-A-2 378 178**
**US-A-1 775 511**
**US-A-2 406 656**
**US-A-2 899 797**

(73) Patentinhaber: **Klöckner- Humboldt- Deutz Aktiengesellschaft, Deutz- Mülheimer- Strasse 111 Postfach 80 05 09, D-5000 Köln 80 (DE)**

(72) Erfinder: **Hünten, Dieter, Weyerhardt 11, D-5060 Bergisch Gladbach 1 (DE)**

EP 0 207 443 B1

## Beschreibung

Die Erfindung bezieht sich auf ein Abgassammelrohr für eine Brennkraftmaschine mit an deren Zylindern ausgangsseitig anschließenden Verbindungsstutzen, die im Mündungsbereich am Abgassammelrohr rechtwinklig oder nahezu rechtwinklig zur Mittelachse desselben verlaufen, wobei im Mündungsbereich jedes Verbindungsstutzens eine die Umlenkung der in das Abgassammelrohr gelangenden Abgase beeinflussende Leiteinrichtung angeordnet ist, die in Strömungsrichtung geneigt zur Längsmittelachse des Abgassammelrohrs verläuft.

Es ist aus der FR-A-2 378 178 ein mehrteiliges Abgassammelrohr für eine mehrzylindrige Brennkraftmaschine bekannt geworden, das für jeden der Zylinder einen mit diesem verbundenen Stutzen aufweist. Das Abgassammelrohr besteht je nach Anzahl der vorgesehenen Zylinder der Brennkraftmaschine aus mehreren Abschnitten, die miteinander über Flansche verschraubt sind. Jeder Rohrabschnitt ist zweiteilig so ausgeführt, daß beide Teile für das durch die Stutzen von den Zylindern zuströmende Abgas eine Düse bilden. Bei diesem bekannten Abgassystem weist das Abgassammelrohr in allen Bereichen einen gleichgroßen Strömungsquerschnitt auf, während die Verbindungsstutzen durch ihre düsenförmige Ausbildung stark eingeengt sind.

Ferner ist aus der CH-A 139 282 ein Abgassammelrohr für eine mehrzylindrige Brennkraftmaschine bekannt geworden, bei dem die mit den Zylindern verbundenen Stutzen bogenförmig in das Abgassammelrohr hineingeführt sind. Die einzelnen Anschlüsse sind im Innern des Abgassammelrohres parallel zu diesem weitergeführt, bevor diese schließlich in das Abgassammelrohr übergehen. Bei diesem bekannten Abgassystem wird im Abgassammelrohr der Strömungsquerschnitt für die Abgase durch den Raumbedarf der einmündenden Stutzen stark eingeengt.

Der Erfindung liegt die Aufgabe zugrunde, ein Abgassammelrohr für eine Brennkraftmaschine der eingangs umrissenen Art mit einfachen Mitteln zu schaffen, bei dem möglichst wenig Strömungswiderstand für das durchzuleitende Abgas vorhanden ist.

Die Aufgabe wird erfindungsgemäß dadurch gelöst, daß die Leiteinrichtung als Zunge ausgebildet ist, die als abgewinkelte Verlängerung der der Zuströmseite der Abgase im Abgassammelrohr zugewandten Seite des Verbindungsstutzen in das Abgassammelrohr hineinragt, daß an der der Zunge gegenüberliegenden Wand des Abgassammelrohres eine Erweiterung in Form einer Ausbuchtung vorgesehen ist, durch die der Hauptströmungsquerschnitt im Abgassammelrohr konstant bleibt und an die zur Beibehaltung des genannten Hauptströmungsquerschnittes eine Verengung anschließt, an deren gegenüberliegenden Seite der Verbindungsstutzen über eine muldenförmige Schräge in das Abgassammelrohr einmündet und daß der Strömungsquerschnitt des Verbindungsstutzens trotz einer Formänderung in seinem Verlauf konstant bleibt.

Durch diese Maßnahmen wird strömungstechnisch eine sehr gute Umlenkung der von den Stutzen zum Abgassammelrohr strömenden Abgase dadurch erzielt, daß die einzelnen Strömungsquerschnitte im Abgassystem keine Einengung aufweisen. Damit erhält man ein Abgassystem, bei dem aufgrund seiner geringen Strömungswiderstände Turbulenzen im Abgassammelrohr weitgehend vermieden werden. Dies wirkt sich strömungstechnisch besonders vorteilhaft auf den Betrieb eines nachgeschalteten Turboladers aus.

Ferner ist es strömungstechnisch besonders vorteilhaft, wenn die Zunge beiderseits an die Wand des Abgassammelrohres anschließt und im mittleren Bereich eine zur Einströmöffnung des Verbindungsstutzens hin durchgebogene, in Längsrichtung verlaufende U-förmige Vertiefung aufweist.

Ein Ausführungsbeispiel der Erfindung wird im folgenden anhand der Zeichnung näher beschrieben. Es zeigt:

Fig. 1 in Ansicht ein Abgassammelrohr an einer mehrzylindrigen Brennkraftmaschine

Fig. 2 einen Schnitt durch einen Teil einer Abgassammelleitung gemäß der Erfindung

Fig. 3 einen Schnitt nach der Linie III-III in Fig. 2.

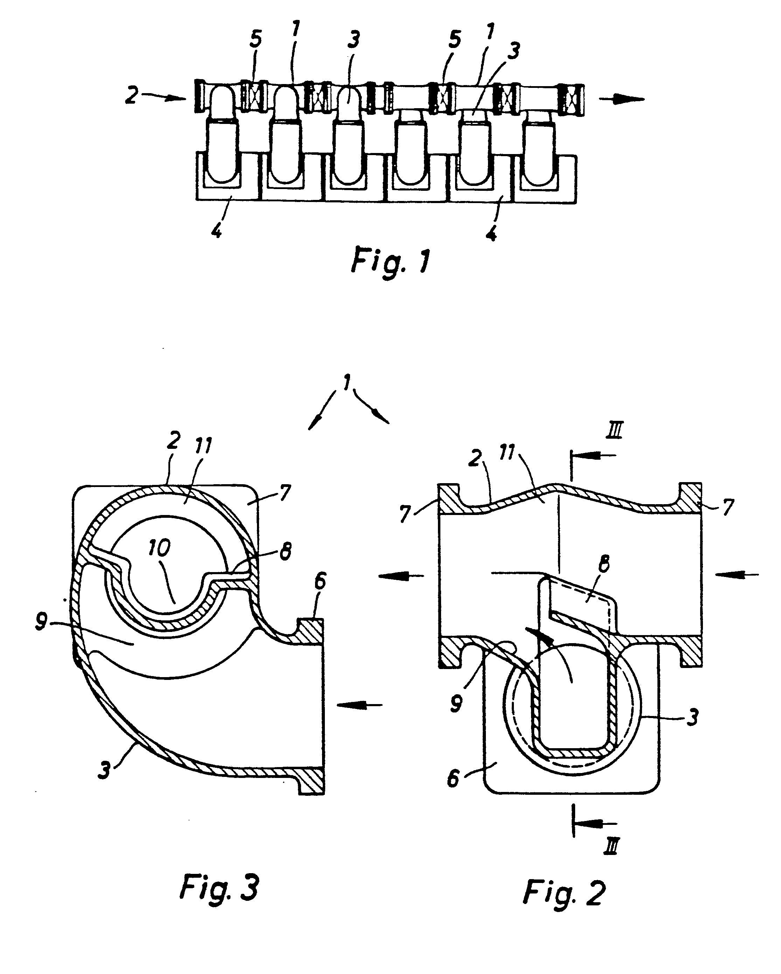

Das in Fig. 1 gezeigte Abgasleitungssystem besteht aus einer Vielzahl gleichartiger Leitungsabschnitte 1, die im wesentlichen T-förmig gestaltet sind und ein ein Abgassammelrohr bildendes Teil 2 sowie einen Verbindungsstutzen 3 zum Anschluß an den entsprechenden Zylinderkopf 4 aufweisen. Das Abgassammelrohr 2 ist bei dieser Ausführung eines Abgasleitungssystems durch Einfügung von Dehnungsgleichern 5 zwischen die Leitungsabschnitte 1 gebildet.

Die Schnittbilder nach den Fig. 2 und 3 zeigen das Innere eines der Leitungsabschnitte 1 mit seitlichem Eintritt der Abgase in den Verbindungsstutzen 3. Nach Fig. 3 ist am Eingang zum Verbindungsstutzen 3 ein Flansch 6 zum direkten oder indirekten Anschluß am Zylinderkopf 4 vorgesehen. Zur Verbindung der Leitungsabschnitte 1 miteinander bzw. mit den Dehnungsgleichern 5 sind an den entsprechenden Endbereichen Flansche 7 angeordnet. Als Hilfsmittel zur Führung der Abgase beim Eintritt in das Abgassammelrohr 2 dient eine in das Abgassammelrohr 2 mit Neigung hineinragende Zunge 8, die einer muldenförmigen Schräge 9 an der Einströmkante zwischen dem Verbindungsstutzen 3 und dem Abgassammelrohr 2 gegenüberliegt. Die Zunge 8 ragt als abgewinkelte Verlängerung der der Zuströmseite der Abgase im Abgassammelrohr 2 zugewandten Seite des Verbindungsstutzens in das Abgassammelrohr 2 hinein und ist einstückig mit dem Leitungsabschnitt 1 hergestellt. Hierdurch ergibt sich eine beiderseitige feste Verbindung der Zunge 8 mit den Wänden des Leitungsabschnitts 1. Außerdem hat die Zunge 8 mittig eine in Längsrichtung verlaufende U-förmige Vertiefung 10, die sich strömungstechnisch vorteilhaft auswirkt.

Die seitlich in den Verbindungsstutzen 3 eintretenden Abgase werden in diesem auf ihrem Wege zum Abgassammelrohr 2 zweimal umgelenkt, wobei sich innerhalb des Verbindungsstutzens 3 der Querschnitt von einer runden über eine rechteckige bis zu einer muldenförmigen Form ändert. Dabei bleibt jedoch unabhängig von den unterschiedlichen Formen des Querschnitts die Größe desselben in allen Strömungsbereichen des Verbindungsstutzens 3 im wesentlichen konstant.

Das Abgassammelrohr 2 ist jeweils oberhalb der Zunge 8 mit einer Ausbuchtung 11 versehen, die so geformt ist, daß der Strömungsquerschnitt im Abgassammelrohr 2 trotz der in diese hineinragenden Zungen 8 im ganzen Strömungsbereich gleich groß ist. Die Ausbuchtungen 11 verlaufen in Umfangsrichtung von einer Zungenseite zur anderen und sind im Querschnitt gemäß Fig. 2 etwa dachförmig gestaltet.

## Patentansprüche

1. Abgassammelrohr für eine Brennkraftmaschine mit an deren Zylindern ausgangsseitig anschließenden Verbindungsstutzen (3), die im Mündungsbereich am Abgassammelrohr (2) rechtwinklig oder nahezu rechtwinklig zur Mittelachse desselben verlaufen, wobei im Mündungsbereich jedes Verbindungsstutzens (3) eine die Umlenkung der in das Abgassammelrohr (2) gelangenden Abgase beeinflussende Leiteinrichtung (8) angeordnet ist, die in Strömungsrichtung geneigt zur Längsmittelachse des Abgassammelrohrs (2) verläuft,
dadurch gekennzeichnet, daß die Leiteinrichtung als Zunge (8) ausgebildet ist, die als abgewinkelte Verlängerung der der Zuströmseite der Abgase im Abgassammelrohr (2) zugewandten Seite des Verbindungsstutzens (3) in das Abgassammelrohr hineinragt, daß an der der Zunge (8) gegenüberliegenden Wand des Abgassammelrohres (2) eine Erweiterung in Form einer Ausbuchtung (11) vorgesehen ist, durch die der Hauptströmungsquerschnitt im Abgassammelrohr (2) konstant bleibt und an die zur Beibehaltung des genannten Hauptströmungsquerschnittes eine Verengung anschließt, an deren gegenüberliegenden Seite der Verbindungsstutzen (3) über eine muldenförmige Schräge (9) in das Abgassammelrohr einmündet und daß der Strömungsquerschnitt des Verbindungsstutzens (3) trotz einer Formänderung in seinem Verlauf konstant bleibt.

2. Abgassammelrohr nach Anspruch 1, dadurch gekennzeichnet, daß die Zunge (8) beiderseits als Begrenzung der muldenförmigen Schräge (9) an die Wandung des Abgassammelrohrs (2) anschließt und im mittleren Bereich eine zur Einströmöffnung des Verbindungsstutzens (3) hin durchgebogene, in Längsrichtung verlaufende U-förmige Vertiefung (10) aufweist.

## Claims

1. An exhaust manifold for an internal combustion engine, the manifold including connecting pipes (3) which are connectable to the outlets of the engine's cylinders and which in their respective transition regions into the manifold (2) extend perpendicularly, or substantially perpendicularly, to the longitudinal axis thereof, in which a guiding device (8) capable of affecting the reorientation of the exhaust gases entering the manifold (2) is arranged in the transition region of each connecting pipe, and in which the guiding device extends in the flow direction at an inclination to the manifold's (2) longitudinal axis,
characterized in that the guiding device is a baffle (8) which protrudes into the manifold and which forms an angle-shaped extension of that side of the connecting pipe (3) that faces the manifold's (2) side at which the exhaust gases enter it, that the manifold's (2) wall disposed opposite the baffle (8) is enlarged by a bulge (11) by means of which the cross-sectional area of the main flow through the manifold (2) is kept constant and which for the purpose of maintaining said constancy is followed by a constriction, that the connecting pipe (3) merges via a trough-shaped slant (9) into the manifold at the side thereof opposite the constriction, and in that notwithstanding a change of shape the cross-sectional area of flow through the connecting pipe (3) remains constant.

2. A manifold according to claim 1, characterized in that the baffle (8) is joined on both sides to the manifold's (2) wall and forms a limitation for the trough-shaped slant (9), and in that the baffle is provided in its mid-section with a longitudinally extending U-shaped recess (10) formed by bending it towards the inlet of the connecting pipe (3).

## Revendications

1. Collecteur d'échappement pour un moteur à combustion interne, comprenant des tubulures de liaison (3) se raccordant à la sortie de ses cylindres qui se développent dans une zone d'embouchure située sur le collecteur d'échappe ment (2), à angle droit, ou bien à peu près à angle droit par rapport à l'axe médian de celui-ci, un dispositif de guidage (8) étant disposé à cette occasion dans la zone d'embouchure de chaque tubulure de liaison (3) et influençant la déflexion des gaz d'échappement qui arrivent dans le collecteur d'échappement (2) et qui se développe dans la direction de l'écoulement, de manière inclinée par rapport à l'axe central longitudinal du collecteur de gaz d'échappement (2); caractérisé en ce que le dispositif de guidage a la forme d'une languette (8), qui émerge dans le collecteur d'échappement comme un prolongement plié en U, du côté de la tubulure de liaison (3) qui est tourné vers le côté de l'arrivée de l'écoulement des gaz d'échappement dans le collecteur d'échappement (2), en ce qu'un élargissement de la paroi du collecteur d'échappement (2), qui est opposé à la languette (8), est prévu sous la forme d'une courbure (11), par laquelle la section de l'écoulement principal dans le collecteur d'échappement (2) reste constante et à laquelle se raccorde un rétrécissement, pour le maintien de la section de l'écoulement principal, la tubulure de liaison (3) débouchant dans le collecteur d'échappement, sur le côté situé face à ce rétrécissement, par une obliquité (9) en forme d'auge et en ce que la section d'écoulement de la tubulure de liaison (3) reste constante, malgré une modification de forme dans son développement.

2. Collecteur d'échappement selon la revendication 1, caractérisé en ce que la languette (8) se raccorde des deux côtés à la paroi du collecteur d'échappement (2), en limitant l'obliquité (9) en forme d'auge et en ce qu'elle possède une cavité (10) se développant en forme de L dans la direction longitudinale, qui est recourbée dans la zone médiane, par rapport à l'orifice d'entrée de l'écoulement de la tubulure de liaison (3).

Fig. 1

Fig. 3

Fig. 2